Europäisches Patentamt

European Patent Office

Office européen des brevets

(11) Veröffentlichungsnummer: **0 407 374 A1**

# (12) EUROPÄISCHE PATENTANMELDUNG

(21) Anmeldenummer: 90890200.0

(22) Anmeldetag: 03.07.90

(51) Int. Cl.5: **B65G 47/61**, A41H 43/02, B65G 9/00

(30) Priorität: 04.07.89 AT 1626/89

(43) Veröffentlichungstag der Anmeldung: 09.01.91 Patentblatt 91/02

(84) Benannte Vertragsstaaten: AT BE CH DE DK ES FR GB GR IT LI LU NL SE

(71) Anmelder: **Promper, Otmar** Tannenweg 21 A-4501 Neuhofen(AT)

(72) Erfinder: **Promper, Otmar** Tannenweg 21 A-4501 Neuhofen(AT)

(74) Vertreter: **Hübscher, Helmut, Dipl.-Ing. et al** Patentanwälte Dipl.-Ing. Gerhard Hübscher Dipl.-Ing. Helmut Hübscher Dipl.-Ing. Heiner Hübscher Spittelwiese 7 A-4020 Linz(AT)

(54) **Einklammerstation zum Einklammern textiler Werkstücke in ein Fördergehänge einer Hängefertigungsanlage od. dgl.**

(57) Eine Einklammerstation (1) zum Einklammern textiler Werkstücke in ein Fördergehänge (2) einer Hängefertigungsanlage weist eine Übergabevorrichtung (6) für das Aufnehmen des flach auf einem Arbeitstisch (3) liegenden Werkstückes und dessen Einklemmen in eine durch Federkraft selbstschließende Klammer (11) des über eine Halteeinrichtung (7) angehaltenen Fördergehänges (2) auf.

Um ein automatisches Einklammern erreichen zu können, ist die Halteeinrichtung (7) mit einer den pendelnd an einem Laufwerk (9) hängenden Klammerträger (10) des Fördergehänges (2) in einer Einklammerstellung fixierenden Klemme (14) ausgerüstet und die Übergabevorrichtung (6) besteht aus einem heb- und senkbaren und zwischen dem Einklammerbereich und dem Aufnahmebereich des Werkstückes hin- und herbewegbaren Greifer (16), wobei eine aufwärts gerichtete Luftdüse (20) im Aufnahmebereich (18) am Arbeitstisch (3) vorgesehen sein kann.

FIG.1

## EINKLAMMERSTATION ZUM EINKLAMMERN TEXTILER WERKSTÜCKE IN EIN FÖRDERGEHÄNGE EINER HÄNGEFERTIGUNGSANLAGE OD. DGL.

Die Erfindung bezieht sich auf eine Einklammerstation zum Einklammern textiler Werkstucke in ein Fördergehänge einer Hängefertigungsanlage od. dgl., mit einer Übegabevorrichtung für das Aufnehmen des flach auf einem Arbeitstisch liegenden Werkstückes und dessen Einklemmen in eine durch Federkraft selbstschließende Klammer des über eine Halteeinrichtung angehaltenen Fördergehänges.

Bei Hängefertigungsanlagen werden die Werkstücke in Fördergehängen, sogenannten Trollys, entlang entsprechend verlegter Förderschienen von Arbeitsstation zu Arbeitsstation gebracht und in den Arbeitsstationen entweder unmittelbar an den Trollys hängend bearbeitet oder von den Trollys zur Bearbeitung abgenommen. Meist werden die Werkstücke für die Hängefertigung beispielsweise durch Zuschneiden und Zusammennähen vorbereitet und dann in den Hängefertigungsanlagen vervollständigt und bis zur Endabnahme des fertigen Werkstückes weiterbearbeitet, so daß es zu einer weitgehend automatisierten, fließbandähnlichen Herstellung kommt. Allerdings bereitet bisher das Übergeben der vorbereiteten Werkstücke in die Hängefertigungsanlage Schwierigkeiten, da die Fördergehänge mit Halteklammern ausgerüstet sind, in die die Werkstücke eingeklemmt werden müssen. Zu diesem Einklammern gibt es aber noch keine befriedigenden maschinellen Einrichtungen und das händische Einklammern ist sehr zeitaufwendig und umständlich und führt zu einer störenden Unterbrechung des Arbeitsablaufes. Es wurde zwar bereits vorgeschlagen, zum Einklammern der Werkstücke an den Arbeitstisch eine Übergabevorrichtung vorzusehen, die aus einem zwischen die Klammern hochfahrbaren Schwert besteht und die beim Hochfahren mitgenommenen Werkstucke in die Klammern einführt, doch können dadurch die Werkstücke nur mit einer Faltung eingeklemmt werden, wodurch die Anwendung dieser Übergabevorrichtungen sehr beschränkt bleibt.

Der Erfindung liegt daher die Aufgabe zugrunde, diese Mängel zu beseitigen und eine Einklammerstation der eingangs geschilderten Art zu schaffen, die ein ordnungsgemäßes und weitgehend selbständiges Aufnehmen und Einklammern der Werkstücke sicherstellt und dabei das einlagige, ungefaltete Halten von Werkstücken erlaubt.

Die Erfindung löst diese Aufgabe dadurch, daß die Halteeinrichtung eine den pendelnd an einem Laufwerk hängenden Klammerträger des Fördergehänges in einer Einklammerstellung fixierende Klemme aufweist und die Übergabevorrichtung aus einem heb- und senkbaren und zwischen dem Einklammerbereich und dem Aufnahmebereich des Werkstückes hin- und herbewegbaren Greifer besteht, wobei vorzugsweise eine aufwärts gerichtete Luftdüse im Aufnahmebereich am Arbeitstisch vorgesehen ist. Da die Halteeinrichtung nicht nur die Fördergehänge in der Einklammerstation stoppt, sondern sie auch in einer ganz bestimmten Einklammerstellung fixiert, in der sich die Klammer oder die Klammern des Fördergehänges immer in der gleichen Lage befinden, kann mit Hilfe eines entsprechend steuerbaren Greifers der Übergabevorrichtung das Werkstück vom Arbeitstisch aufgenommen und exakt in die gewünschte Klammer eingeführt werden. Die Greiferbewegungen sind genau vorherbestimmbar, so daß mit verhältnismäßig geringem Aufwand die Werkstückaufnahme und die Werkstückeinklammerung durchgeführt werden kann. Ist eine Luftdüse im Aufnahmebereich installiert, läßt sich das Werkstück für den Ansatz des Greifers durch Luftbeaufschlagung anheben, was die Werkstückaufnahme erleichtert und funktionssicher macht. Die Einklammerstation kann jedem Arbeitstisch zugeordnet werden und erlaubt das automatische Einklammern ein- oder mehrschichtiger Werkstücke, so daß sie bestens für jede Hängefertigungsanlage od. dgl. geeignet ist und auch bereits bestehende Hängefertigungsanlagen nachträglich mit diesen Einklammerstationen ergänzt werden können.

Besonders vorteilhaft ist es, wenn die Klemme zwei um eine Querachse zur Förderrichtung des Fördergehänges zusammenschwenkbare Klemmbügel umfaßt und zusätzlich ein von oben auf das Laufwerk aufsetzbarer, in Förderrichtung liegender Bremsbolzen vorgesehen ist, da so auf konstruktiv einfache Weise eine Fixierung des Klammerträgers in jeder Richtung möglich ist. Durch die Klemmbügel wird der vom Fahrwerk pendelnd herabhängende Klammerträger festgehalten und der auf das Laufwerk, das meist nur aus einer Rolle besteht, aufgedrückte Bremsbolzen schließt eine Schwenkbewegung um die Führungsschiene aus. Die an den Klammerträgern hintereinandergereihten Klammern besitzen keirterlei Bewegungsfreiheit mehr und können genau mit dem Greifer der Übergabevorrichtung angefahren werden.

Da zur Fixierung des Klammerträgers schwenkbare Klemmbügel dienen, kann vorteilhafterweise der Klammerträger des Fördergehänges nach dem Einklammern eines Werkstückes über die Klemmbügel zur Freigabe des Greifers verschwenkbar sein, so daß ein einwandfreies Abziehen des Greifers nach dem Einklammern des Werkstückes möglich ist. Da zum Einklammern des Werkstük-

kes der das Werkstück haltende Greifer in die Klammer eingeführt wird und die selbstschließende Klammer ein Zurückziehen des Greifers aus der Klammer nicht mehr zuläßt, wird durch ein Verschwenken der Klammer in Förderschienenrichtung die Klammer seitlich vom Greifer wegbewegt und der Greifer kann ungestört in seine Ausgangsposition zurückfahren.

Sitzt erfindungsgemäß der heb- und senkbare Greifer auf einem waagrecht geführten Teleskopschlitten und entspricht der Greiferhub mindestens dem Höhenabstand zwischen Arbeitstisch und Klammer des Fördergehänges, ergibt sich eine zweckmäßige Übergabevorrichtung, die durch den Teleskopschlitten bis in den Bereich der Einklammerstellung problemlos ausgefahren werden kann, aber durch ein Zurückziehen den Förderweg für das Fördergehänge wieder vollkommen freimacht. Damit läßt sich ohne komplizierte, aufwendige Kinematik der Weg zwischen Aufnahmebereich des Werkstückes am Arbeitstisch und Einklammerbereich an der Klammer überwinden und einwandfrei dafür sorgen, daß der Greifer das flach am Arbeitstisch liegende Werkstück aufnehmen, unter die Klammer bringen, hochheben und einklammern kann.

Sind die Luftdüsen innerhalb einer auf dem Arbeitstisch befestigbaren Rampe angeordnet, wird einerseits die Installation der Luftzuleitung möglich, ohne den Arbeitsablauf am Arbeitstisch zu stören und andererseits bringt die Erhöhung durch die Rampe im Aufnahmebereich zusammen mit der Luftbeaufschlagung des Werkstückes eine funktionssichere Übergabe des Werkstückes an den Greifer mit sich.

In der Zeichnung ist der Erfindungsgegenstand an Hand eines Ausführungsbeispieles rein schematisch veranschaulicht, und zwar zeigen

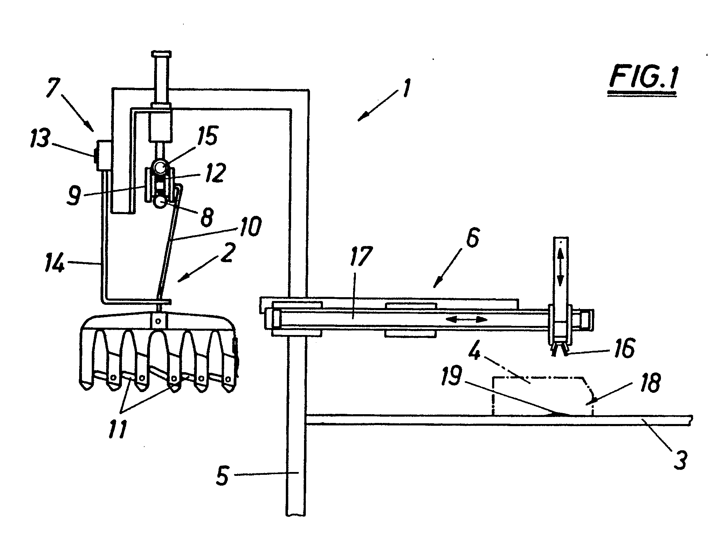

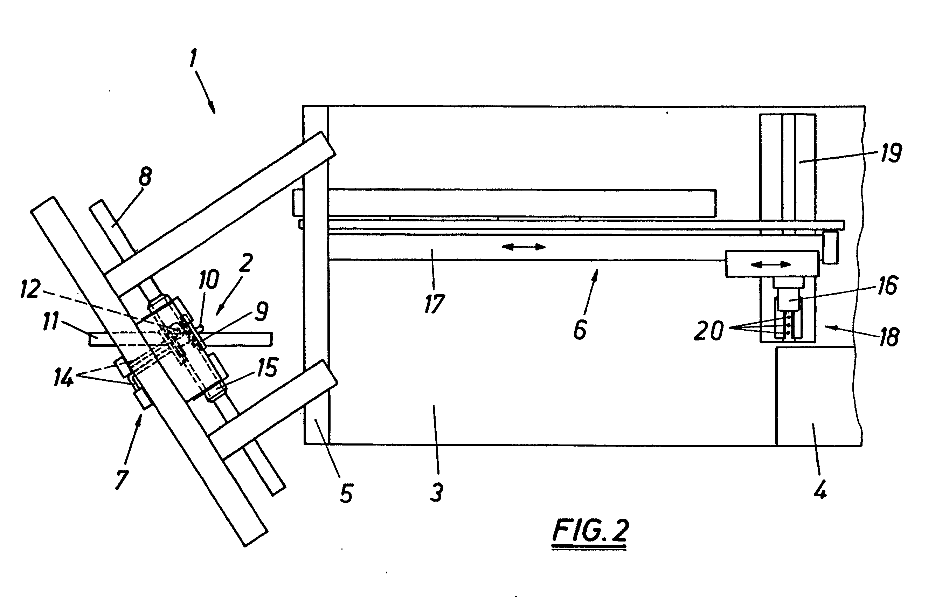

Fig. 1 und 2 eine erfindungsgemäße Einklammerstation in Seitenansicht und Draufsicht und

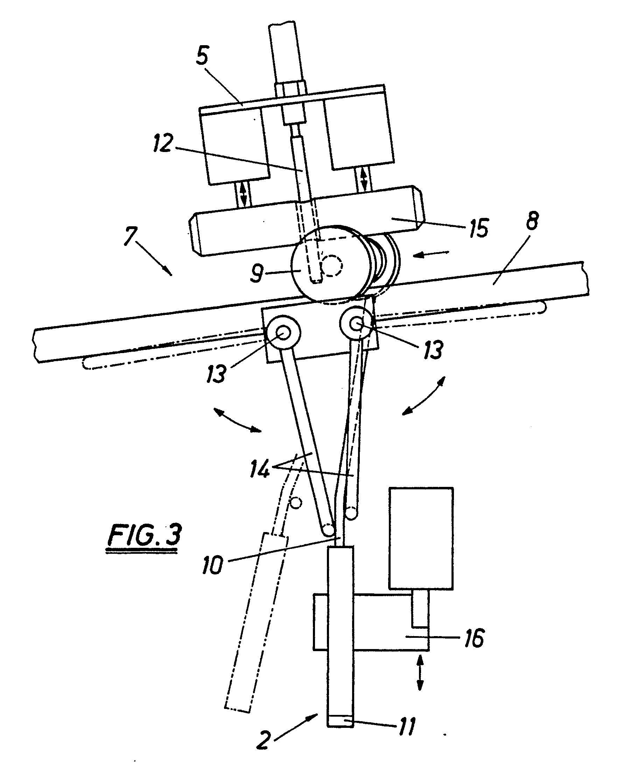

Fig. 3 die Halteeinrichtung dieser Einklammerstation in Stirnansicht größeren Maßstabes.

Eine Einklammerstation 1 zum automatischen Einklammern textiler Werkstücke in ein Fördergehänge 2 einer nicht weiter dargestellten Hängefertigungsanlage weist ein an einen Arbeitstisch 3 einer nur angedeuteten Bearbeitungsstation, beispielsweise einer Nähstation 4, anschließbares Gestell 5 auf, an dem einerseits eine Übergabevorrichtung 6 für das Aufnehmen des flach auf dem Arbeitstisch 3 liegenden Werkstückes und dessen Einklammern in das Fördergehänge 2 und andererseits eine Halteeinrichtung 7 für das Fixieren des Fördergehänges 2 in einer Einklammerstellung zum Einklammern des Werkstückes durch die Übergabevorrichtung 6 befestigt sind.

Das Fördergehänge 2, auch Trolly genannt, umfaßt eine auf einer Förderschiene 8 geführte Laufrolle 9 od. dgl. Laufwerk und einen daran pendelnd hängenden Klammerträger 10, der mehrere nebeneinandergereihte, durch Federkraft selbstschließende Klammern 11 zur Aufnahme der Werkstücke trägt.

Die Halteeinrichtung 7 setzt sich aus einem Blockierstift 12 zum Blockieren des ankommenden Fördergehänges 2, aus zwei um eine Querachse 13 zur Förderrichtung zusammenschwenkbar gelagerten Klemmbügeln 14 zum Fassen und Fixieren des Klammerträgers 10 in der Einklammerstellung sowie aus einem in Förderrichtung liegenden und auf die Laufrolle 9 aufdrückbaren Bremsbolzen 15 zum schwenksicheren Bremsen des Fördergehänges 2 in der Einklammerstellung zusammen.

Dadurch ist gewährleistet, daß das mit einem Werkstück zu beladende Fördergehänge 2 in einer stets gleichbleibenden und lagefixierten Einklammerstellung gehalten ist und mit der Übergabevorrichtung 6 exakt angesteuert werden kann.

Die Übergabevorrichtung 6 weist einen heb- und senkbaren Greifer 16 auf, der auf einem horizontal geführten Teleskopschlitten 17 montiert ist und sich zwischen dem Bereich der Klammern 11 eines mit der Halteeinrichtung 7 fixierten Fördergehänges 2 und einem Aufnahmebereich 18 auf dem Arbeitstisch 3 zur Übernahme eines Werkstückes bewegen läßt. Im Aufnahmebereich 18 ist eine quer zur Werkstückvorschubrichtung liegende Rampe 19 vorgesehen, die unterhalb des Greifers 16 aufwärts gerichtete Luftdüsen 20 für eine Luftbeaufschlagung des zu übernehmenden Werkstückes aufweist.

Die Einklammerstation 1 wird über ein nicht weiter dargestelltes Steuergerät in Abhängigkeit von Lichtschranken od. dgl. Sensoren vollautomatisch gesteuert und funktioniert folgendermaßen:

Ein zu bestückendes Fördergehänge 2 wird entlang der Förderschiene 8 in die Einklammerstation 1 einlaufen gelassen und durch Absenken des Blockierstiftes 12 an einem Durchlaufen gehindert. Nun senkt sich der Bremsbolzen 15 auf das Laufrad 9 des Fördergehänges 2 und die Klemmbügel 14 schwenken aus ihrer Hochlage nach unten zusammen und fasssen den Klammerträger 10. Damit ist das Fördergehänge 2 in der Einklammerstellung unbeweglich festgelegt, so daß Jede der Klammern 11 durch den Greifer 16 genau angesteuert werden kann.

Zur Aufnahme des Werkstückes wird der Greifer 16, der sich in oberer Lage befindet, in den Aufnahmebereich 18 am Arbeitstisch 3 abgesenkt und erfaßt das durch Luftbeaufschla gung über die Luftdüsen 20 und die Rampe 19 hochgehobene Werkstück, wobei das Signal zum Aufnehmen erfolgt, sobald beispielsweise das Nähaggregat 4 seine Arbeit beendet und der Nähfaden abgeschnitten ist. Der Greifer 16 bewegt sich nun mit dem festgeklemmten Werkstück zum Fördergehänge 2, wobei der Greifer 16 durch den ausfahrenden Teleskopschlitten 17 frei vorkragend bis unter die ausgewählte Klammer 11 gefahren wird. Erst dann bewegt sich der Greifer mit dem eingeklemmten Werkstück hoch und zieht das mit den Greiferarmen festgeklemmte Werkstück in die betreffende Klammer ein. Da durch die selbstschließende Klammer 11 ein Zurückbewegen des Greifers 16 nicht mehr möglich ist, wird zur Freigabe des Greifers der Klammerträger 10 des Fördergehänges 2 über die Klemmbügel 14 bei geöffnetem Greifer verschwenkt und damit die Klammer vom Greifer abgezogen. Der durch das Verschwenken des Klammerträgers 10 freigegebene Greifer 16 fährt in angehobener Position zurück in die Ausgangsstellung oberhalb des Aufnahmebereiches 18, das Fördergehänge 2 wird durch Heben des Bremsbolzens 15 und des Blockierstiftes 12 freigegeben und das Fördergehänge 2 wird durch die Klemmbügel 14 aus der Einklammerstation 1 abgestoßen. Das die Einklammerstation 1 verlassende Fördergehänge wird von der Hängefertigungsanlage wieder übernommen und die Einklammerstation 1 ist für den nächsten Einklammervorgang bereit.

## Ansprüche

1. Einklammerstation (1) zum Einklammern textiler Werkstücke in ein Fördergehänge (2) einer Hängefertigungsanlage od. dgl., mit einer Übergabevorrichtung (6) für das Aufnehmen des flach auf einem Arbeitstisch (3) liegenden Werkstückes und dessen Einklemmen in eine durch Federkraft selbstschließende Klammer (11) des über eine Halteeinrichtung (7) angehaltenen Fördergehänges (2), dadurch gekennzeichnet, daß die Halteeinrichtung (7) eine den pendelnd an einem Laufwerk (9) hängenden Klammerträger (10) des Fördergehänges (2) in einer Einklammerstellung fixierende Klemme (14) aufweist und die Übergabevorrichtung (6) aus einem heb- und senkbaren und zwischen dem Einklammerbereich und dem Aufnahmebereich des Werkstückes hin- und herbewegbaren Greifer (16) besteht, wobei vorzugsweise eine aufwärts gerichtete Luftdüse (20) im Aufnahmebereich (18) am Arbeitstisch (3) vorgesehen ist.

2. Einklammerstation nach Anspruch 1, dadurch gekennzeichnet, daß die Klemme zwei um eine Querachse (13) zur Förderrichtung des Fördergehänges (2) zusammenschwenkbare Klemmbügel (14) umfaßt und zusätzlich ein von oben auf das Laufwerk (9) aufsetzbarer, in Förderrichtung liegender Bremsbolzen (15) vorgesehen ist.

3. Einklammerstation nach Anspruch 2, dadurch gekennzeichent, daß der Klammerträger (10) des Fördergehänges (2) nach dem Einklammern eines Werkstückes über die Klemmbügel (14) zur Freigabe des Greifers (16) verschwenkbar ist.

4. Einklammerstation nach einem der Ansprüche 1 bis 3, dadurch gekennzeichnet, daß der heb- und senkbare Greifer (16) auf einem waagrecht geführten Teleskopschlitten (17) sitzt und der Greiferhub mindestens dem Höhenabstand zwischen Arbeitstisch (3) und Klammer (11) des Fördergehänges (2) entspricht.

5. Einklammerstation nach einem der Ansprüche 1 bis 4, dadurch gekennzeichnet, daß die Luftdusen (20) innerhalb einer auf dem Arbeitstisch (3) befestigbaren Rampe (19) angeordnet sind.

FIG.1

*FIG.2*

_FIG.3_

Europäisches
Patentamt

# EUROPÄISCHER RECHERCHENBERICHT

EP 90890200.0

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl⁵) |
|---|---|---|---|
| A | DE - A1 - 3 122 118 (YOSHIDA) * Zusammenfassung * -- | 1 | B 65 G 47/61 A 41 H 43/02 B 65 G 9/00 |
| A | DE - A1 - 3 048 938 (MAUL) * Seite 7 * -- | 1 | |
| A | EP - A1 - 0 260 331 (PFAFF) * Zusammenfassung * ---- | 1 | |

RECHERCHIERTE SACHGEBIETE (Int. Cl⁵)

A 41 H
B 65 G

Der vorliegende Recherchenbericht wurde für alle Patentansprüche erstellt.

| Recherchenort | Abschlußdatum der Recherche | Prüfer |
|---|---|---|
| WIEN | 19-09-1990 | BAUMGARTNER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82